# EUROPÄISCHE PATENTANMELDUNG

(11) **EP 0 622 746 A2**
(43) Veröffentlichungstag der Anmeldung: **02.11.1994**
(21) Anmeldenummer: 94201100.8
(22) Anmeldetag: 21.04.1994
(51) Int. Cl.: G06F 15/68

(54) **Verfahren zum Transformieren eines verzerrten Eingangsbildes und Anordnung zur Durchführung des Verfahrens**

(30) Priorität: 29.04.1993 DE 4314106
(71) Anmelder: Philips Patentverwaltung GmbH, 22335 Hamburg (DE); PHILIPS ELECTRONICS N.V., 5621 BA Eindhoven (NL)
(72) Erfinder: Koppe, Dr. Heinrich c/o Philips Patentverwaltung, D-20097 Hamburg (DE); Klotz, Erhard Paul Artur c/o Philips, D-20097 Hamburg (DE)
(74) Vertreter: Hartmann, Heinrich, Dipl.-Ing.

(57) **Zusammenfassung**

Die Erfindung betrifft ein Verfahren zum Transformieren eines durch eine Röntgenaufnahme erzeugten, verdünnte Strukturen enthaltenden Eingangsbildes, das sich aus durch ihre Koordinaten und ihren jeweiligen Eingangsbildwert definierten Bildpunkten zusammensetzt, in ein im wesentlichen verzerrungsfreies Ausgangsbild, das sich aus durch ihre Koordinaten und ihren jeweiligen Ausgangs-Bildwert definierten Bildpunkten zusammensetzt, wobei aus den Koordinaten eines Bildpunktes im Eingangsbild die zugeordneten Koordinaten im Ausgangsbild bestimmt werden und einen Ausgangsbildwert aus dem Eingangs-Bildwert des betreffenden Bildpunktes abgeleitet wird. Die Zeit für die Transformation kann wesentlich dadurch reduziert werden, daß durch eine Schwellwertoperation die Bildpunkte (u, v) des Eingangsbildes ermittelt werden, in denen die verdünnten Strukturen abgebildet werden und daß, nur für diese Bildpunkte die Transformation durchgeführt wird.

## Beschreibung

Verfahren zum Transformieren eines verzerrten Eingangsbildes und Anordnung zur Durchführung des Verfahrens.

Die Erfindung betrifft ein Verfahren zum Transformieren eines durch eine Röntgenaufnahme erzeugten, verdünnte Strukturen enthaltenden Eingangsbildes, das sich aus durch ihre Koordinaten und ihren jeweiligen Eingangs-Bildwert definierten Bildpunkten zusammensetzt, in ein im wesentlichen verzerrungsfreies Ausgangsbild, das sich aus durch ihre Koordinaten und ihren jeweiligen Ausgangs-Bildwert definierten Bildpunkten zusammensetzt, wobei aus den Koordinaten eines Bildpunktes im Eingangsbild die zugeordneten Koordinaten im Ausgangsbild bestimmt werden und ein Ausgangs-Bildwert aus dem Eingangs-Bildwert des betreffenden Bildpunktes abgeleitet wird.

Ein - für Eingangsbilder mit beliebigen Strukturen geeignetes - Verfahren der eingangs genannten Art ist aus der EP-A 0 375 053 bekannt. Durch die Transformation werden die im Eingangsbild enthaltenen Verzerrungen beseitigt. Bei dem bekannten Verfahren erfolgt die Transformation mit Hilfe einer Adreßliste, die für jeden Bildpunkt des Eingangsbildes die Koordinaten (d.h. die Adresse) des Ausgangsbildes enthält, an denen dieser Bildpunkt im Eingangsbild liegen würde, wenn keine Verzerrungen vorhanden wären.

Dabei kann es vorkommen, daß einigen Bildpunkten im Ausgangsbild kein Bildwert zugeordnet werden kann, so daß das Ausgangsbild Lücken aufweist. Deshalb wird bei dem bekannten Verfahren eine andere Möglichkeit bevorzugt, bei der aus den Koordinaten eines jeden Bildpunktes im Ausgangsbild die zugeordneten Koordinaten im Eingangsbild ermittelt werden und aus dem dort vorhandenen Eingangs-Bildwert der Ausgangs-Bildwert für den betreffenden Bildpunkt abgeleitet wird.

Weiterhin ist aus der Zeitschrift IEEE Comp. in Cardiology, Boston, Oct. 7-10, 1986 (1987), Seiten 615 - 618 ein Transformationsverfahren bekannt, bei dem aus den Koordinaten der Bildpunkte des Ausgangsbildes mittels zweier Transformationspolynome die zugehörigen Koordinaten im Eingangsbild berechnet werden. Die Koeffizienten dieser Transformationspolynome können anhand der Röntgenaufnahme eines z.B. gitterförmigen Testkörpers nach der Methode der kleinsten Fehlerquadrate (least-sqares-fit) einmal ermittelt und dann gespeichert werden. - Obwohl dies in der genannten Veröffentlichung nicht ausdrücklich erwähnt wird, ergibt sich für den Fachmann, daß er den Rechnungsgang auch in der umgekehrten Richtung ausführen kann, d.h., daß er aus den Koordinaten des Eingangsbildes mittels eines geeigneten Transformationspolynoms die Koordinaten des Ausgangsbildes berechnen kann.

Den bekannten Verfahren ist gemeinsam, daß die Transformationsverfahren relativ lange dauern, weil sie für jeden Bildpunkt des Eingangsbildes oder des Ausgangsbildes durchgeführt werden müssen. Dies gilt unabhängig von dem Gegenstand, der durch die Röntgenaufnahme abgebildet wird.

Es ist Aufgabe der vorliegenden Erfindung, dieses Verfahren so auszugestalten, daß es bei verdünnten Strukturen (dilute structures) schneller arbeitet; unter verdünnten Strukturen werden dabei für die Diagnose wichtige Strukturen verstanden, die nur einen kleinen Teil des Bildes bedecken und deren Absorption bzw. Helligkeit sich wesentlich von der Absorption bzw. Helligkeit des restlichen Bildes unterscheidet - wie beispielsweise das menschliche Gefäßsystem in einer digitalen Subtraktionsangiographie.

Diese Aufgabe wird erfindungsgemäß dadurch gelöst, daß durch eine Schwellwertoperation die Bildpunkte des Eingangsbildes ermittelt werden, in denen die verdünnten Strukturen abgebildet werden und daß nur für diese Bildpunkte die Transformation durchgeführt wird.

Bei der Erfindung werden also durch die Schwellwertoperation diejenigen Bildpunkte im verzerrten Eingangsbild ermittelt, in denen die verdünnten Strukturen abgebildet werden. Nur auf diese Bildpunkte des Eingangsbildes wird das Transformationsverfahren angewendet. Die übrigen Bildpunkte, in denen der sogenannte Hintergrund abgebildet wird, werden nicht transformiert. Da deren Zahl bei der Subtraktionsangiographie 100 mal so groß ist wie die Zahl der den verdünnten Strukturen zugeordneten Bildpunkte, reduziert sich die Bearbeitungszeit für das erfindungsgemäße Transformationsverfahren gegenüber dem bekannten Verfahren entsprechend. Im Gegensatz zu allen anderen Verfahren ist das erfindungsgemäße Transformationsverfahren also vom Inhalt des Eingangsbildes abhängig.

Eine Anordnung zur Durchführung des Verfahrens ist gekennzeichnet durch:
a) ein Röntgenaufnahmesystem zum Erzeugen eines Eingangsbildes durch eine Röntgenaufnahme,
b) einen Bildwandler zum Umsetzen des Eingangsbildes in eine Folge digitaler Eingangs-Bildwerte,
c) eine Speicheranordnung zum Speichern der Eingangs-Bildwerte und von Ausgangs-Bildwerten,
d) Mittel zum Vergleichen der Eingangs-Bildwerte mit einem Referenzwert und
e) in Abhängigkeit von dem Vergleich gesteuerte Mittel zum Ermitteln von Koordinaten im Ausgangsbild aus den Koordinaten eines durch den Vergleich detektierten Bildpunktes im Eingangsbild und zum Ableiten eines Ausgangs-Bildwertes aus dem zu dem Bildpunkt gehörenden Eingangs-Bildwert .

Die Erfindung wird nachstehend anhand der Zeichnung näher erläutert. Es zeigen:
- Fig. 1: ein Eingangsbild und ein Ausgangsbild mit einer verdünnten Struktur,
- Fig. 2: eine Röntgenanlage mit einer Einrichtung zur Bildtransformation nach der Erfindung und
- Fig. 3: ein Flußdiagramm zur Erläuterung der Bildtransformation.

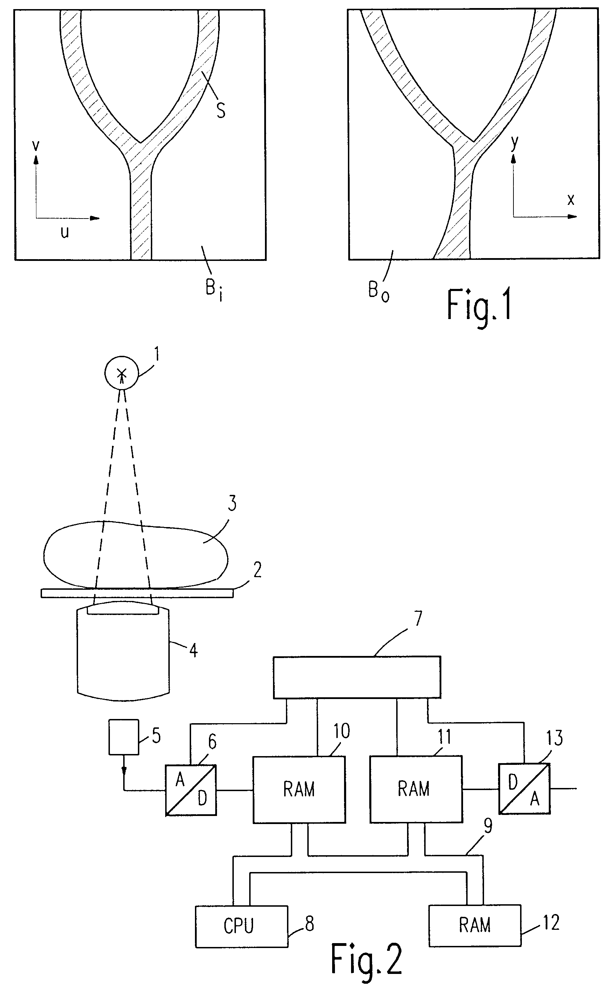

In Fig. 1 ist das durch eine Röntgenaufnahme erzeugte Eingangsbild Bᵢ und das daraus durch die Transformation erzeugte verzerrungsfreie Ausgangsbild Bₒ dargestellt. Diese Bilder setzen sich aus einer Vielzahl von Bildpunkten (Pixeln) zusammen, beispielsweise 512 x 512 Bildpunkten. Die Lage der Bildpunkte in diesen Bildern wird durch ihre Koordinaten gekennzeichnet, wobei im folgenden die Koordinaten des Eingangsbildes mit u,v und die Koordinaten des Ausgangsbildes Bₒ mit x,y bezeichnet sind. Jedem Bildpunkt ist ein Bildwert (Grauwert) zugeordnet, der die Helligkeit des Bildes in dem betreffenden Bildpunkt kennzeichnet. Der Bildwert für einen Bildpunkt mit den Koordinaten u,v im Eingangsbild ist mit Bᵢ (u,v) bezeichnet und dementsprechend ein Bildwert im Ausgangsbild mit Bₒ (x,y). Die Bilder Bᵢ und Bₒ stellen eine durch digitale Subtraktionsangiographie erzeugte Röntgenaufnahme eines Blutgefäßes dar. Dabei werden vor und nach einer Kontrastmittelinjektion in die Blutbahn zwei Röntgenaufnahmen des Untersuchungsbereichs angefertigt und voneinander subtrahiert. Das Differenzbild stellt nur noch die Blutgefäße S dar, weil nur diese infolge der Kontrastmittelinjektion in den beiden Aufnahmen unterschiedlich erscheinen. Die Bildwerte in den die Blutgefäße S wiedergebenden Bildpunkten weichen deutlich von den Bildwerten des Bildhintergrundes ab; sie sind kleiner.

Die in Fig. 2 dargestellte Röntgenanlage umfaßt einen Röntgenstrahler 1, der einen auf einer Tischplatte 2 befindlichen Patienten 3 durchstrahlt. Das dadurch erzeugte Röntgenstrahlen-Relief wird dem Eingangsbildschirm eines Bildverstärkers 4 zugeführt, dessen in der Helligkeit verstärktes Ausgangsbild von einer Fernsehkamera 5 aufgenommen wird.

Der Eingangsbildschirm des Bildverstärkers 4 ist gekrümmt, was dazu führt, daß das von dem Bildverstärker gelieferte Bild kissenförmige Verzerrungen aufweist. Weitere weniger ausgeprägte Verzerrungen werden durch den Einfluß des Erdmagnetfeldes und durch die Videokamera 5 hervorgerufen.

Das von der Videokamera gelieferte analoge Videosignal wird von einem Analog-Digital-Wandler 6 in eine Folge digitaler Datenworte umgesetzt, die in einem Speicher 10 unter aufeinanderfolgenden Adressen gespeichert werden. Dies wird von einer Video-Kontrolleinheit 7 gesteuert. Der Speicher 10, der somit das verzerrte Eingangsbild enthält, ist über ein Bussystem 9 an einen Microcomputer 8 angeschlossen, der über dieses Bussystem auch auf weitere Speicher 11 und 12 Zugriff hat. Der Speicher 11 dient der Aufnahme des durch die Transformation von Verzerrungen befreiten Ausgangsbildes Bₒ. Mittels der Video-Kontrolleinheit 7 können die Ausgangs-Bildwerte aus dem Speicher 11 ausgelesen und über einen Digital-Analog-Wandler 13 einer nicht näher dargestellten Wiedergabeeinheit (Monitor) zugeführt werden.

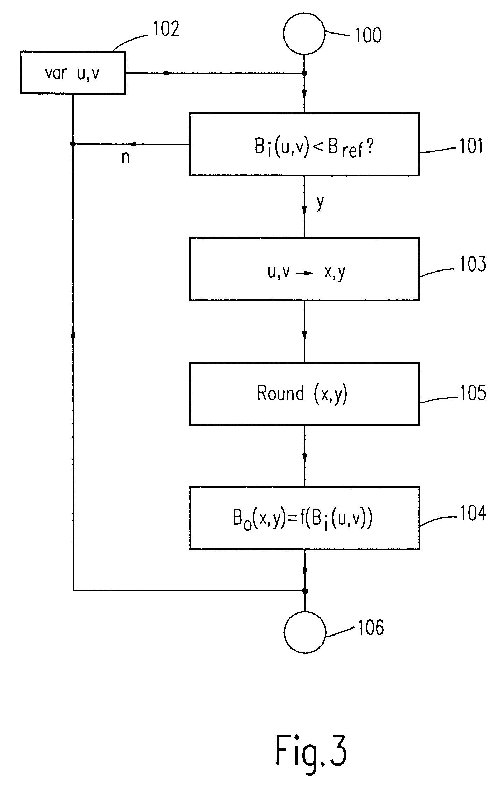

Nach einer Röntgenaufnahme (oder nach zwei Röntgenaufnahmen bei der Subtraktionsangiographie) ist im Speicher 10 das Eingangsbild Bᵢ enthalten, das das Blutgefäß S verzerrt darstellt. Im folgenden wird anhand von Fig. 3 erläutert, wie durch die Transformation ein entzerrtes Bild Bₒ des Blutgefäßes S im Speicher 11 erzeugt wird. Zu Beginn (Block 100) wird ein bestimmter Bildpunkt mit den Koordinaten u,v im Eingangsbild Bᵢ vorgegeben, z.B. der erste Bildpunkt der ersten Zeile des Videosignals. Jeder Bildpunkt - im Eingangswie im Ausgangsbild - hat ganzzahlige Koordinaten, und in den Speichern 10 bzw. 11 ist dafür jeweils ein Speicherplatz mit einer bestimmten Adresse vorgesehen. Die Adressen und die Koordinaten sind einander also umkehrbar eindeutig zugeordnet und im einfachsten Fall ergeben sich die Adressen unmittelbar aus den Koordinaten - wie in der EP-A 450 718 beschrieben.

Es wird dann der zugehörige Bildwert Bᵢ (u,v) aus dem Speicher 10 aufgerufen und mit einem Referenzwert B_{ref} verglichen (Schritt 101). Der Wert B_{ref} ist so gewählt, daß er zwischen den Bildwerten an den Bildpunkten der verdünnten Struktur (Blutgefäß) S und den Bildwerten an den Hintergrund-Bildpunkten liegt. Ergibt dieser Vergleich, daß der aufgerufene Bildwert Bᵢ (u,v) nicht kleiner ist als der Referenzwert, dann verzweigt das Programm zum Schritt 102, durch den die Koordinaten u,v - d.h. die Adresse - geändert werden, so daß beispielsweise der zweite Bildpunkt der ersten Zeile aufgerufen wird. Ist auch dessen Bildwert nicht kleiner als der Referenzwert B_{ref}, wird der nächste Bildpunkt der Zeile aufgerufen usw., bis ein Bildpunkt erhalten wird, dessen Bildwert kleiner ist als der Referenzwert. In diesem Fall werden im Verfahrensschritt 103 aus den Koordinaten u,v (bzw. der Adresse des Bildpunktes im Speicher 10) die Koordinaten x,y (bzw. die Adresse, die diesem Bildpunkt im Speicher 11 zugeordnet ist) bestimmt. Diese Bestimmung kann entweder mittels einer Adreßliste oder durch Rechnung erfolgen.

Die Ermittlung mittels einer mit Hilfe von Testaufnahmen ermittelten Adreßliste ist in der EP-O 375 053 beschrieben. Sie setzt voraus, daß in dem Speicher 12 für alle Koordinaten u,v (bzw. für jede Adresse des Speichers 10) die Koordinaten x, y (bzw. die Adresse im Speicher 11) gespeichert ist, die der Bildpunkt im entzerrten Bild hat. Im nächsten Schritt 104 - der gestrichelt angedeutete Schritt 105 entfällt dabei - wird dann der Ausgangs-Bildwert Bₒ (x,y) für die so ermittelten Koordinaten (bzw. Adresse) aus dem Bildwert Bᵢ (u,v) des Bildpunktes mit den Koordinaten u,v im verzerrten Eingangsbild abgeleitet. Im einfachsten Fall läuft dies darauf hinaus, daß der Bildwert Bᵢ (u,v) unter der Adresse x,y in den Speicher 11 für das Ausgangsbild Bₒ geschrieben wird.

Die Berechnung der Koordinaten x,y des Ausgangsbildes aus den Koordinaten u,v ergibt sich analog zu den Erläuterungen aus der erwähnten Zeitschrift IEEE Comp. in Cardiology . . ., Seiten 615 bis 618. Danach werden die Werte x bzw. y aus den Werten u,v mittels eines Polynoms zweiten (oder höheren) Grades ermittelt, dessen Koeffizienten zuvor m einem Kalibrierungsschritt mittels eines Testkörpers bestimmt und - z.B. im Speicher 12 - gespeichert worden sind (dessen Speicherkapazität in diesem Fall wesentlich kleiner sein kann als für die Adreßliste erforderlich). Diese Berechnung stellt die bevorzugte Methode zur Bestimmung der Koordinaten dar.

Die auf diese Weise berechneten Werte x,y sind in der Regel nicht ganzzahlig, obwohl die Werte u,v, von denen bei der Berechnung ausgegangen wird, ganzzahlig sind; beispielsweise können sich Werte x = 100,25 und y = 104,80 ergeben. Im Speicher 11 stehen jedoch nur für ganzzahlige Koordinaten x,y Adressen zur Verfügung. Um die Adresse näherungsweise zu berechnen, gibt es zwei Möglichkeiten, die beide in der zitierten Veröffentlichung beschrieben sind. Die eine Möglichkeit besteht darin, durch Rundung der angegebenen Werte (die zu x = 100 und y = 105 führt) die Koordinaten des Bildpunktes im Verfahrensschritt 105 zu ermitteln, dessen Mittelpunkt am dichtesten bei den errechneten Koordinaten liegt. Hierbei ergeben sich die gleichen Ungenauigkeiten wie bei dem zuvor beschriebenen Verfahren mittels einer Adreßliste.

Die andere Möglichkeit besteht darin, im Verfahrensschritt 105 den vier Bildpunkten - (100/104), (101/104), (100/105) und (101/105), deren Mittelpunktkoordinaten um die errechneten Koordinaten herumliegen, einen Anteil von dem Bildwert Bᵢ (u,v) aus dem Eingangsbild zuzuordnen. Dieser Anteil ist umso größer, je geringer der Abstand zwischen diesen berechneten Koordinaten und den Mittelpunktkoordinaten des betreffenden Bildpunktes ist. Zu diesen Anteilen können - von anderen Bildpunkten u,v des Eingangsbildes - gegebenenfalls noch weitere Anteile hinzukommen. Der Rechenaufwand ist zwar größer, doch ist damit auch eine höhere Bildqualität des Ausgangsbildes erzielbar. - Es können auch andere Verfahren benutzt werden, um den berechneten Werten Bildpunkte aus dem Ausgangsbild zuzuordnen.

Wenn noch nicht alle Bildpunkte u,v des Eingangsbildes aufgerufen worden sind, verzweigt das Programm anschließend erneut zu dem Verfahrensschritt 102, und es wird der nächste Bildpunkt aufgerufen. Wenn alle Bildpunkte aufgerufen sind, ist das Transformationsverfahren beendet (106). Im Speicher 11 befindet sich dann ein entzerrtes Bild der Gefäße, d.h. die Bildwerte sind in diesem Speicher unter solchen Adressen gespeichert, daß beim Auslesen mit der üblichen Adressenfolge ein unverzerrtes Bild entsteht. Der Zeitaufwand für die Transformation ist wesentlich geringer als bei dem bekannten Verfahren, weil die zeitaufwendigen Schritte 103, 104 und gegebenenfalls 105 nur für die Bildpunkte des Eingangsbildes durchgeführt werden, die die Struktur erst darstellen.

Das unverzerrte Ausgangsbild enthält lediglich die verdünnte Struktur. Der Rest des Ausgangsbildes enthält keine Helligkeitsmodulation, was einen unnatürlichen Eindruck hervorruft. Gegebenenfalls kann dieser Bildeindruck dadurch verändert werden, daß den Hintergrundbildpunkten im entzerrten Bild ein geeignetes Hintergrund-Bildmuster überlagert wird.

## Patentansprüche

1. Verfahren zum Transformieren eines durch eine Röntgenaufnahme erzeugten, verdünnte Strukturen (5) enthaltenden Eingangsbildes (Bᵢ), das sich aus durch ihre Koordinaten (u,v) und ihren jeweiligen Eingangs-Bildwert (Bᵢ(u,v)) definierten Bildpunkten zusammensetzt, in ein im wesentlichen verzerrungsfreies Ausgangsbild (Bₒ), das sich aus durch ihre Koordinaten (x,y) und ihren jeweiligen Ausgangs-Bildwert (Bₒ(x,y)) definierten Bildpunkten zusammensetzt, wobei aus den Koordinaten eines Bildpunktes im Eingangsbild die zugeordneten Koordinaten im Ausgangsbild bestimmt werden und ein Ausgangs-Bildwert aus dem Eingangs-Bildwert des betreffenden Bildpunktes abgeleitet wird,
dadurch gekennzeichnet, daß durch eine Schwellwertoperation die Bildpunkte (u, v) des Eingangsbildes ermittelt werden, in denen die verdünnten Strukturen (5) abgebildet werden und daß nur für diese Bildpunkte die Transformation durchgeführt wird.

2. Anordnung zur Durchführung des Verfahrens nach Anspruch 1,
gekennzeichnet durch:
a) ein Röntgenaufnahmesystem (1, 4) zum Erzeugen eines Eingangsbildes (Bᵢ) durch eine Röntgenaufnahme,
b) einen Bildwandler (5,6) zum Umsetzen des Eingangsbildes in eine Folge digitaler Eingangs-Bildwerte (Bᵢ(u,v)),
c) eine Speicheranordnung (10, 11) zum Speichern der Eingangs-Bildwerte (Bᵢ(x,y)) und von Ausgangs-Bildwerten (Bₒ(u,v)),
d) Mittel (7) zum Vergleichen (101) der Eingangs-Bildwerte mit einem Referenzwert (B_{ref}) und
e) in Abhängigkeit von dem Vergleich gesteuerte Mittel (7) zum Ermitteln (103) von Koordinaten im Ausgangsbild aus den Koordinaten eines durch den Vergleich detektierten Bildpunktes im Eingangsbild und zum Ableiten (104) eines Ausgangs-Bildwertes (Bₒ(x, y)) aus dem zu dem Bildpunkt (u, v) gehörenden Eingangs-Bildwert (Bᵢ(u, v)).
